# EUROPEAN PATENT SPECIFICATION

(11) **EP 4 247 587 B1**
(45) Date of publication and mention of the grant of the patent: **18.12.2024**
(21) Application number: 21835823.2
(22) Date of filing: 18.11.2021
(51) Int. Cl.: B23Q 1/00, B23Q 3/18

(54) **PALLET CLAMPING AND POSITIONING SYSTEM**
KLEMM- UND POSITIONIERSYSTEM FÜR PALETTEN
SYSTÈME DE SERRAGE ET DE POSITIONNEMENT DE PALETTE

(30) Priority: 20.11.2020 SI 202000214
(43) Date of publication of application: 27.09.2023
(73) Proprietor: SINCO D.O.O., 8261 Jesenice na Dolenjskem (SI)
(72) Inventor: SINKO, Stanko, 8261 Jesenice na Dolenjskem (SI); SINKO, David, 8261 Jesenice na Dolenjskem (SI)
(74) Representative: Golmajer Zima, Marjanca
(86) International application number: PCT/IB2021/060703
(87) International publication number: WO 2022/107040

(56) References cited:
- DE-U1- 202006 009 437
- US-B2- 9 604 330

## Description

### Subject of invention

The subject of the invention is a pallet clamping and positioning system, what is known as a zero-point clamping system, comprising a base plate and at least one pallet, on which a workpiece to be machined is arranged.

### Technical problem

The technical problem is to configure a pallet clamping and positioning as well as fixing system for fixing a pallet, and thus a workpiece, onto a base plate, which will enable the pallet to be positioned and clamped to the base plate quickly, easily, precisely and reproducibly, based on manual mechanical force alone, and which will be easy to manufacture and use, and consequently economically viable.

### Prior art

When machining a workpiece in different machine tools, especially in automated production, the workpiece must be placed in a precise position in the machine tool and positioned in such a way that different operations can be carried out on the workpiece. Position determining and positioning the workpiece in the correct position must be fast, reliable, precise and also repeatable. Typically, different workpieces are machined in a machine tool, requiring different clamping devices and elements. Clamping and positioning workpieces in the machine tool is therefore a demanding and time-consuming task. As the machine is not running at this time, it is desirable to keep the clamping time as short as possible. Therefore, workpieces are pre-placed and positioned on work pallets, which often have a uniform clamping and positioning system on the machine tool table to reduce machine dead time. To this end, the zero-point clamping system was introduced. Each clamping element, workpiece, pallet, machine tool table has its own zero point. The position of a workpiece in a machine tool is determined relative to the zero point of the pallet and the machine tool.

Fast clamping and precise positioning can be achieved with a clamping device comprising a base plate and a pallet to receive a workpiece. This clamping method is described in EP 0712684 A1 (Iwata et al). The base plate is positioned and fixed on the machine tool table by means of fixtures. The base plate has truncated cone-shaped projections that match the recesses on the bottom face of the pallet. The pallet has a plurality of holes on its top face, which are arranged in a defined grid to receive fixtures for fixing the workpiece. The workpiece is positioned and fixed on the pallet separately from the machine. Once the workpiece is placed on the pallet and the machine is ready for machining, the pallet and the workpiece are placed onto the base plate so that the protrusions from the base plate engage the recesses on the underside of the pallet. The pallet is simply fixed to the base plate. This type of clamping device allows the workpiece to be positioned in the machine tool faster than with conventional clamping elements, thus reducing machine dead time, but it does not allow either reproducible positioning in the same place or zero-point positioning.

The workpiece is positioned on the pallet and fixed in the pallet bore, which is also the pallet zero point, often by means of a push pin. EP 2595778 A1 (Schlüssel) describes a clamping system with a push pin mounted either on the workpiece or on the pallet and a drawing-in bolt in the bore of the pallet or the machine tool table. The workpiece is positioned on the pallet by inserting the push pin into a bore in the pallet. The axis of the bore coincides with the axis of the push pin and the direction of push of the push pin into the bore. The drawing-in screw is arranged in a pallet bore which runs transversally to the pallet bore to receive the push pin and, when activated, presses the push pin against the bore wall. The push pin, and therefore the workpiece, is fixed in X-, Y- and Z-directions. As there is a risk of the push pin becoming wedged in the pallet bore, the pallet bore is configured as a bore with two different radii and offset centres so as to form a longitudinal recess in the pallet bore in which the push pin rests. The centre of the radius of the recess into which the push pin is pushed is on the same axis as the zero point, so that the workpiece is fixed and positioned at the zero point of the pallet via the push pin. The disadvantage of this solution is that the pallet bore is very difficult to produce. Even a minimal error in the production of the bore will cause the workpiece to move away from the zero point, resulting in machining errors.

DE 202006009437 U1 describes a modular clamping and positioning system for fixing a workpiece onto a flat base plate or a pallet. The workpiece is placed on the pallet and fixed to the pallet though special clamping jaws which are guided in common T-shaped grooves. Special clamping jaws are used. To fix the workpiece onto the pallet, clamping jaws are slidingly pushed against the workpiece and fixed via bolt into the pallet. The position of the clamping jaws and thus the workpiece is changed with each new setting. Consequently, the position of the workpiece in the machine must be determined each time.

US 9604330 B2 describes a machining fixture which contains a base, a plurality of positioning blocks and a workpiece. The base and the workpiece holder have a plurality of fixing faces which, when the workpiece holder is connected with the base, contact each other. During the use, these faces can get damaged or broken. Then the positioning block which is placed in grooves of the base and the workpiece holder, respectively, due to its flexibility deforms inward and moves into the groove of the workpiece to offset the height of each face.

### Solution to the technical problem

The technical problem is solved by a pallet clamping and positioning system, the main characteristics of which are given in the first independent patent claim.

A pallet clamping and positioning system comprises a base plate and at least one pallet on which a workpiece to be machined is arranged, the base plate having arranged in its upper face a first group of parallel grooves and a second group of parallel grooves extending perpendicularly to the first group of grooves, a distance d between the centrelines of the grooves being equal, and each groove having the shape of an equilateral trapezium in cross-section; wherein the pallet has, in its bottom face, at least one short positioning groove and a centring element arranged therein, at least part of the centring element having a cross-sectional shape of an equilateral trapezium which, when the pallet is mounted onto the base plate, engages a portion of the groove of the base plate. This enables fast and accurate positioning and fixing of the pallet and thus the workpiece to the base plate in both horizontal and vertical directions. Each short positioning groove is arranged in the centre of each side of the pallet, the pallet comprising at least one short positioning groove, preferably four grooves. These grooves are arranged on the pallet in a 90° grid so that each two short positioning grooves are opposite each other.

The pallet has, in its upper face, arranged a first group of parallel grooves and a second group of parallel grooves extending perpendicularly to the first group of grooves, the distance d between the centrelines of the grooves being equal, and each groove having the shape of an equilateral trapezium in cross-section. The distance d between the longitudinal centrelines of two adjacent grooves depends on the size of the pallet and the type of workpiece. The most frequent distance is 50 ± 0.005 mm but can be smaller as well, such as 20 ± 0.005, 30 ± 0.005, or larger, such as 100 ± 0.005 mm, 150 ± 0.005 mm, 200 ± 0.005 mm. The distance d is an integer divisible by 10.

Each groove of the base plate and/or pallet has the cross-sectional shape of an equilateral trapezium, with the base of the groove being the shorter base of the trapezium.

Each groove of each group of grooves is positionally marked with respect to its distance from the centreline of the base plate and/or pallet, where the groove coaxial with the centreline of the base plate and/or pallet is assigned the value "0" and defines the basic zero point of the base plate and/or pallet.

This arrangement of the grooves on the base plate and/or pallet produces, at the intersections of the centrelines of the grooves of the first group and the second group, a grid of positioning points with known coordinates with a tolerance of ± 0.005 mm, said points representing the grid of zero points of the base plate and/or pallet.

At the centre of each intersection of the two perpendicularly extending grooves, a through threaded hole is arranged to receive a fixing screw.

An additional through threaded hole is arranged between two adjacent through threaded holes located at the centre of the intersection of the two perpendicularly extending grooves, each through threaded hole being sealed by a plastic threaded plug.

The wedge-shaped part of the centring element is configured in the form of an equilateral trapezium with sides inclined by an angle equal to or greater than 0°, preferably between 5° and 30°, more preferably between 8° and 12°. The angle of inclination of the side of the wedge-shaped part of the centring element is identical to the angle of inclination of the side of the groove of the base plate.

The pallet clamping and positioning system according to the invention, by its configuration, not only enables the workpiece to be placed, positioned and fixed on the selected pallet outside the machine tool area, but also significantly reduces the time required for placing, positioning and fixing the pallet on the base plate and thus on the machine tool table. The positioning trapezium assembly of the centring element arranged on the pallet and the matching groove arranged on the base plate allow a significant reduction in handling time. A pallet comprising at least one centring element, preferably three, most preferably four, is arranged on the base plate in such a way that the trapezium-shaped centring elements engage the grooves of the base plate and abut with their lateral sides against the lateral sides of each groove to the extent that the pallet with its bottom face abuts the upper face of the base plate. The rectangular arrangement of the centring elements prevents movement of the pallet, which is fixed in the X- and Y-directions of the base plate. The fixing of the pallet in the Z-direction is carried out by a screw connection in a selected number of through threaded holes of the pallet with a conventional hand tool. The removal of the pallet from the base plate is carried out in reverse order. Due to the known grid of the grooves on the base plate, where each groove is positionally defined, the position of the pallet on the base plate is known and reproducible when reinstalled onto the base plate. Therefore, the pallet with the workpiece can be removed from the working area of the machine and, if necessary, placed back in the same position as it was in the previous machining operation. This avoids re-measuring the position of the pallet and workpiece and re-determining the zero point, which is the starting point for each machining operation. This significantly increases the active time of the machine tool and thus its efficiency.

The pallet clamping and positioning and fixing system according to the invention is distinguished by its ease of handling as well as of manufacture of the system itself, i.e. the base plate and the pallet. As the whole system works by manual mechanical force, no additional pneumatic or hydraulic connections are needed. The pallet clamping and positioning and fixing system according to the invention is configured to comprise a minimum number of mutually compatible components. Also, no special tools are needed for the installation, but it is sufficient to use the usual tools available in any workplace. The same applies to the positioning and fixing the workpiece on the pallet.

The mutual fixing of the base plate and the pallet by manual mechanical force alone is an advantage for workplaces that do not have pneumatic and/or hydraulic installations. If the mechanical locking elements are suitably replaced, the manual mechanical force can be replaced by pneumatic and/or hydraulic means of mutual fixation of the base plate and the pallet. In such a case, the mechanical locking elements are replaced by appropriate, known ways of pneumatic or hydraulic fixing.

Another important feature of the pallet clamping and positioning system is its thermal stability. During machining, heat is transferred from the workpiece to the pallet, which heats up and can expand. This can cause the pallet to expand, changing the position of the zero point of the pallet, resulting in errors during the machining of the workpiece. In the case of the fixing system according to the invention, the heat is transferred to the centring elements which freely abut against the grooves of the base plate and are therefore freely expandable within the groove in the X- and/or Y-axes of the base plate. Expansion and thus deformation of the pallet is prevented, as is a change in the position of the zero point of the pallet.

Based on their configuration, the base plate and pallet can be adapted to the type of machining and workpieces. One or more identically or differently configured pallets can be positioned on one base plate. It is also possible to position several identical or different workpieces on one pallet. The way in which they are combined depends on the type and requirements of the machining and has no limitations.

It is also possible to configure different pallets adapted to the type of workpiece.

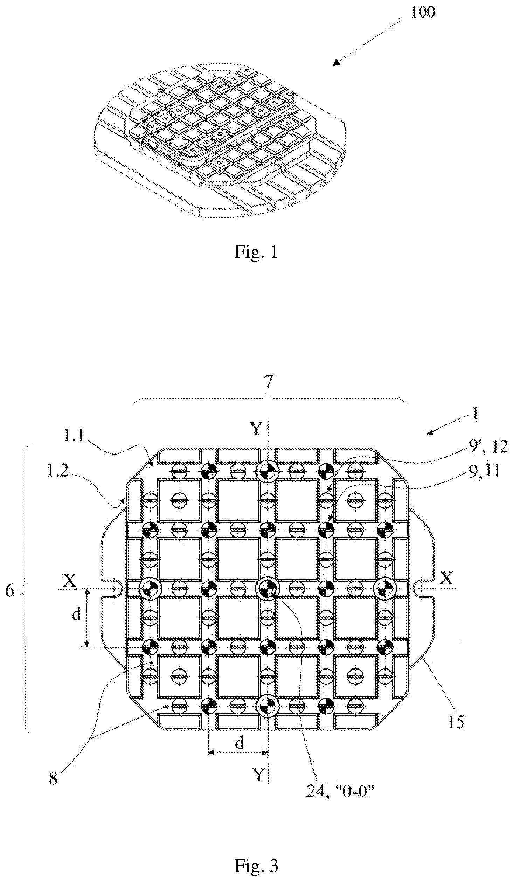

The pallet clamping and positioning system of the invention will be described in more detail below by way of an embodiment and drawings representing in
Fig. 1 Clamping system, assembled

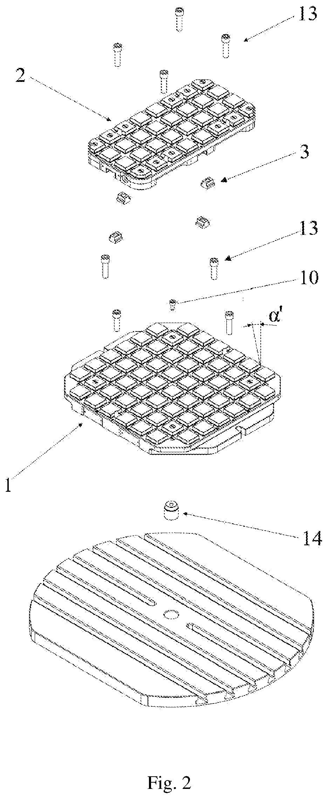

Fig. 2 Clamping system, exploded view
Fig. 3 Base plate

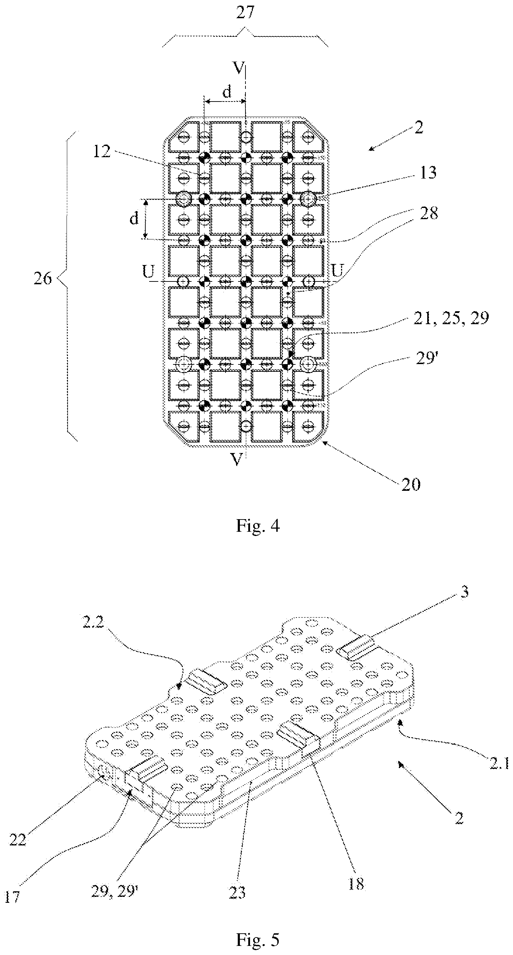

Fig. 4 Pallet, plan view
Fig. 5 Pallet, view from below

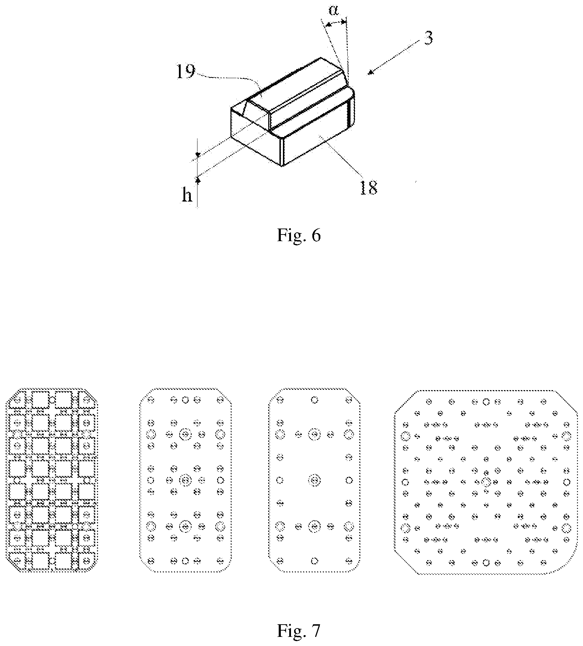

Fig. 6 Centring element
Fig. 7 Pallet types

The relative expressions like front, rear, upper, lower etc. are defined herein from the perspective of the operator of the clamping system, when the latter is placed on the machine tool table.

The pallet clamping and positioning system 100 comprises a base plate 1 which is fixed directly onto a machine tool table, at least one pallet 2 on which a workpiece or a second pallet is clamped and at least one centring element 3, preferably three, more preferably four elements by means of which the pallet 2 is positioned on the base plate.

The base plate 1 may be of any geometric shape, either square, rectangle or circle, depending on the shape of the workpieces. The base plate 1 has a flat bottom face 1.2, with which it rests on the machine tool table. An upper face 1.1 of the base plate 1 comprises a first group 6 of grooves 8 that are parallel to each other and equidistantly spaced by a distance d, and a second group 7 of grooves 8 that are parallel to each other and extend perpendicularly to the first group 6 of grooves 8, the grooves 8 of the second group 7 being equidistantly spaced by the same distance d as the grooves 8 of the first group 6. The distance d, which is the distance between the longitudinal centrelines of two adjacent grooves 8, is 50 ± 0.005 mm in the embodiment. The distance d may vary from the specified one, e.g. 20 ± 0.005 mm, 30 ± 0.005 mm, 40 ± 0.005 mm, 100 ± 0.005 mm, 150 ± 0.005 mm, 200 ± 0.005 mm, depending on the size of the pallet 2 and the workpiece to be fixed to the pallet. The distance d is preferably an integer divisible by 10. Each groove 8 has the cross-sectional shape of an equilateral trapezium, with the base of the groove 8 being the shorter base of the trapezium, so that the groove 8 is substantially wedge-shaped. An individual groove 8 of each group 6, 7 is positionally marked with respect to the distance from the centreline X and centreline Y of the base plate 1, respectively. Thus, the groove 8 which is co-axial with the centreline X, Y of base plate 1, is assigned the value "0", the groove which is the first right groove of the groove "0" is assigned the value "+50", the groove which is the first left groove of the groove "0" is assigned the value "-50". Each subsequent groove 8 in the same direction is assigned a value that is by 50 greater or 50 smaller, respectively, than the value of the preceding groove 8. This arrangement of the grooves 8 produces, at the intersections of the centrelines of the grooves 8 of the first group 6 and the second group 7, a grid of positioning points 24 with known coordinates with a tolerance of ± 0.005 mm, said points representing the grid of zero points of the base plate 1.

At the centre of substantially each intersection 11 of the two perpendicularly extending grooves 8, a through threaded hole 9 is arranged to receive a fixing screw 13, with which the pallet 2 is fixed onto the base plate 1. An additional through threaded hole 9' is arranged in the middle between two adjacent through threaded holes 9 located at the centre of the intersection 11 of the two perpendicularly extending grooves 8. The through threaded holes 9, 9' produce a grid of holes with a mutual distance of half the distance d, in the embodiment this is 25 ± 0.005 mm.

The through threaded holes 9, located in the outer grooves 8, in relation to the base plate 1, are used, if necessary, as fixing holes to receive the fixing screws 13, with which the base plate 1 is fixed onto the machine tool table. The fixing of the base plate 1 to the machine tool table can also be made through the through threaded hole 9 located at the junction of the grooves "0-0", by means of a central fixing screw 10 and an intermediate element 14, or by means of a screw connection with specially shaped flanges 15 integrally moulded to the base plate 1 on the opposing sides. The through threaded holes 9, 9', which are not currently in use, are sealed by a plastic threaded plug 12, thus preventing the ingress of dirt into each through threaded hole 9, 9'.

The through threaded hole 9, located at the intersection of the grooves 8 marked "0-0", is the zero point of the base plate 1.

The size of the base plate 1 depends on the size of the machine tool, the size of the workpiece to be machined, the number of workpieces being machined at the same time, e.g. in automated production. The number of grooves 8 within one group and the number of positioning points also vary with size.

The pallet 2, which is preferably rectangular in shape, but may also be square or circular, has grooves 28 arranged on the upper face 2.1, i.e. the face facing away from the base plate 1 in the in-service condition. The grooves 28 are arranged in a grid at the mutual distance d, which is equal to the grid of the grooves of the base plate 1 or is its multiple and in the same way as the grooves 8 of the base plate 1 are arranged: the grooves 28 of a first group of 26 are parallel to each other and equidistantly spaced by the distance d, and the grooves 28 of a second group 27, which are parallel to each other and extend perpendicularly to the first group 26 of the grooves 28, are mutually equidistantly spaced at the same distance d as the grooves 28 of the first group of 26. The distance d between the longitudinal centrelines of each two adjacent grooves 28, is 50 ± 0.005 mm in the embodiment. The distance d may vary from the specified one, e.g. 20 ± 0.005 mm, 30 ± 0.005 mm, 40 ± 0.005 mm, 100 ± 0.005 mm, 150 ± 0.005 mm, 200 ± 0.005 mm, and depends on the size of the pallet and the workpiece to be fixed to the pallet. The distance d is preferably an integer divisible by 10. Each groove 28 has the cross-sectional shape of an equilateral trapezium, with the base of the groove 28 being the shorter base of the trapezium, so that the groove 28 is wedge-shaped. An individual groove 28 of each group 26, 27 is positionally marked with respect to the distance from the centreline U and centreline V of the pallet 2, respectively. Thus, the groove 28 which is co-axial with the centreline U, V of pallet 2, is assigned the value "0", the groove which is the first right groove of the groove "0" is assigned the value "+50", the groove which is the first left groove of the groove "0" is assigned the value "-50". Each subsequent groove 28 in the same direction is assigned a value that is by the distance d, in the embodiment 50, greater or smaller, respectively, than the value of the preceding groove 28. This arrangement of the grooves 28 produces, at the intersections of the centrelines of the grooves 28 of the first group 26 and the second group 27, a grid of positioning points 25 with known coordinates with a tolerance of ± 0.005 mm, said points representing the grid of zero points of the pallet 2.

At the centre of the intersection 21 of the two perpendicular grooves 28, a through threaded hole 29 is arranged to receive a fixing screw 13, with which the workpiece or a second pallet, if several of them are present, is fixed onto the pallet 2. An additional through threaded hole 29' is arranged in the middle between two adjacent through threaded holes 29 located at the centre of the intersection 21 of the two perpendicularly extending grooves 28. The through threaded holes 29, 29' produce a grid of holes with a mutual distance of half the distance d, in the embodiment this is 25 ± 0.005 mm.

The through threaded holes 29, 29' are intended, but not exclusively, to receive the fixing screw 13, with which the workpiece is fixed onto the pallet 2. The through threaded holes 29', which are arranged closer to the outer edge of the pallet 2, can also be used as fixing holes to fix the pallet 2 onto the base plate 1.

The placement and positioning of the pallet 2 on the base plate 1 is facilitated by the centring elements 3 arranged in short positioning grooves 17 on a bottom face 2.2 of the pallet 2. Each short positioning groove 17 is arranged at the centre of each side and extends into the interior of the bottom face 2.2 so that the longitudinal centreline of the short positioning groove 17 coincides with the centreline U, V of the pallet 2. The short positioning grooves 17 are arranged in a 90° grid so that each two short positioning grooves 17 are opposite each other. More than one short positioning groove 17, preferably four short positioning grooves 17, are arranged in the bottom face 2.2 of pallet 2. Each short positioning groove 17 receives one centring element 3.

The centring element 3 is configured as a dowel having a base 18 which fits the short positioning groove 17 in width and height, and a wedge-shaped part 19 which extends out of the short positioning groove 17 when positioned in the short positioning groove 17, the cross-section of which is configured in the form of an equilateral trapezium with sides inclined at the same angle α as the angle α' of the grooves 8 of the base plate 1. The angle α, α' is equal to or greater than 0°, is preferably between 5° and 30°, more preferably between 8° and 12°. The height h of the wedge-shaped part of the centring element 3 is lower than the height of the groove 8 of the base plate 1 so that, when mounted onto the base plate 1, the pallet 2 with its bottom face 2.2 rests on the upper face 1.1 of the base plate 1 without clearance. The centring element 3 is secured against falling out of the short positioning groove 17 or the pallet 2 by a screw which is screwed into it through a through threaded hole 29.

When the pallet 2 with the bottom face 2.2 is placed onto the base plate 1, each centring element 3 engages the groove 8 of the base plate 1, with its two lateral sides resting on the lateral sides of the groove 8. At the same time, the pallet 2 with its bottom face 2.2 rests on the upper face 1.1 of the base plate 1. Since the centring elements 3 in the pallet 2 are arranged perpendicularly to each other, the pallet 2 is positioned and simultaneously fixed in the X- and Y-axes, when the centring elements 3 engage the grooves. The fixing of the pallet 2 in the Z-axis is done by screwing the fixing screws 13 into the through threaded holes 9, 9' of the base plate 1.

The workpiece to be machined is positioned and fixed on the base plate 1 by means of the pallet 2 on which it is positioned and fixed. In exceptional cases, the workpiece can also be mounted directly onto the base plate 1. Several pallets 2 can be placed onto the base plate, even differently shaped pallets, if several small workpieces or several different workpieces are being machined on one machine at the same time.

The base plate 1, the pallet 2 and the centring elements 3 are made of metallic material with required mechanical properties, preferably high-quality stainless steel and/or heat-treated alloy steel.

A workpiece to be machined is fixed in a certain position on the pallet 2 by means of conventional clamping devices and pre-prepared through threaded holes 29, 29'. The dense grid in the size of half the distance d/2, 25 ± 0.005 mm in the embodiment, allows a large number of possible workpiece fixing positions, all of which are precisely defined and reproducible on the pallet 2 due to the marked grooves 28 and their precise production. The clamping of the workpiece onto the pallet 2 is carried out outside the machine tool and independently of the machine operation. When the machine tool is prepared to receive and machine a workpiece, the latter is transferred to the machine tool together with the pallet 2 and placed onto the base plate 1, which is pre-installed on the machine tool table. The pallet 2 with its bottom face 2.2 rests on the upper face 1.1 of the base plate 1, the centring elements 3 or their wedge-shaped parts 19 engage the grooves 8 of the base plate 1. The position of the pallet 2 in relation to the base plate 1 is precisely determinable by the grooves 8 and 28, each of which has a marking indicating the distance from the centreline X, Y and U, V respectively. Thus, the position of the pallet 2 relative to the base plate 1 is determined in each case with accuracy of ± 0.005 mm, which is also the accuracy of the manufacturing of the grooves 8 of the pallet 2 and the grooves 28 of the base plate 1. The pallet 2 is positioned and also fixed in the X- and Y-axes of the base plate 1 due to the centring elements 3 engaging the grooves 8 of the base plate 1. Fixing in the Z-axis vertically to the base plate 1 and the pallet 2 is achieved by screwing the pallet 2 onto the base plate 1.

The pallet 2 is most often configured symmetrically for ease of machining and positioning the workpiece on it, which can be a problem when placing it onto the base plate 1. This is why the pallet 2, which is basically polygonal, has one corner 20 rounded.

For the purpose of determining the position of both the pallet 2 on the base plate 1 and the workpiece on the pallet 2, the pallet is provided with a recess 22 on one lateral side, usually the shorter side, for receiving a memory chip, into which position data is entered by the machine tool software.

For the purpose of batch machining, it is possible to configure pallets whose upper face 2.1 is without grooves 8 and comprises a flat smooth face 2.1 in which through threaded holes 29, 29' are arranged in a specific grid. At least part of the holes 29, 29' so configured are arranged on the pallet 2 in a grid which, when the pallet 2 is placed onto the base plate 1, coincides with the through threaded holes 9, 9'. These types of pallets are intended in particular for fixing a vice or for fixing specially shaped workpieces in batch production.

For the purpose of moving the pallet 2 from the preparation site to the machining site, the pallet 2 has recesses 23 on the lateral sides to allow the user to grip and thus transfer the pallet. Lifting devices are often used to move larger pallets. For this purpose, eye-shaped clamps or other types of known clamps are screwed into the corner through threaded holes 9.

In the case where the workstation is equipped with pneumatic and/or hydraulic installations, the manual mechanical fixing of the pallet 2 onto the base plate 1 may be replaced by a pneumatic or hydraulic method of mutual fixation. For this purpose, the fixation system with the central fixing screw 10 and the intermediate element 14 is replaced by a corresponding, known pneumatic fixation system comprising a fixation pin in the pallet 2 and a pneumatic clamp arranged adjacent in the base plate 1. The base plate is additionally equipped with fluid inlet channels.

## Claims

1. A pallet clamping and positioning system comprising a base plate and at least one pallet on which a workpiece to be machined is arranged and enables fast and accurate positioning and fixing of the pallet and thus the workpiece on the base plate in both horizontal and vertical directions, wherby the base plate (1) has, in its upper face (1.1), arranged a first group (6) of parallel grooves (8) and a second group (7) of parallel grooves (8) extending perpendicularly to the first group (6) of grooves (8), a distance (d) between the centrelines of the grooves (8) being equal, **characterized in that** each groove (8) having the shape of an equilateral trapezium in cross-section, and **that** the pallet (2) has at least one short positioning groove (17) and a centring element (3) arranged therein in its bottom face (2.2), at least part (19) of the centring element (3) having a cross-sectional shape of an equilateral trapezium which, when the pallet (2) is mounted onto the base plate (1), engages a portion of the groove (8) of the base plate (1).

2. The pallet clamping and positioning system according to claim 1, **characterized in that** the pallet (2) has, in its upper face (1.1), arranged a first group (26) of parallel grooves (28) and a second group (27) of parallel grooves (28) extending perpendicularly to the first group (26) of grooves (28), a distance (d) between the centrelines of the grooves (28) being equal, and each groove (28) having the shape of an equilateral trapezium in cross-section.

3. The pallet clamping and positioning system according to any preceding claim, **characterized in that** each short positioning groove (17) is arranged in the centre of each side of the pallet (2), the pallet (2) comprising at least one short positioning groove (17), preferably four grooves.

4. The pallet clamping and positioning system according to any preceding claim, **characterized in that** the short positioning grooves (17) on the pallet (2) are arranged in a 90° grid so that each two short positioning grooves (17) are opposite each other.

5. The pallet clamping and positioning system according to any preceding claim, **characterized in that** the wedge-shaped part (19) of the centring element (3) is configured in the form of an equilateral trapezium with sides inclined by an angle (α) equal to or greater than 0°.

6. The pallet clamping and positioning system according to claim 5, **characterized in that** the angle (α) is between 5° and 30°, preferably between 8° and 12°.

7. The pallet clamping and positioning system according to any preceding claim, **characterized in that** the distance (d) between the two longitudinal centrelines of two adjacent grooves (8, 28) equals an integer, divisible by 10.

8. The pallet clamping and positioning system according to any preceding claim, **characterized in that** each groove (8, 28) has the cross-sectional shape of an equilateral trapezium, with the base of the groove (8, 28) being the shorter base of the trapezium.

9. The pallet clamping and positioning system according to any preceding claim, **characterized in that** each individual groove (8, 28) of each group (6, 7; 26, 27) of grooves is positionally marked with respect to the distance from the centreline (X, Y) of the base plate (1) and/or the centreline (U, V) of the pallet (2), wherein the groove (8, 28) which is co-axial with the centreline (X, Y) of base plate (1) and/or the centreline (U, V) of the pallet (2), is assigned the value "0".

10. The pallet clamping and positioning system according to any preceding claim, **characterized in that** at the centre of each intersection (11, 21) of the two perpendicularly extending grooves (8, 28) a through threaded hole (9, 29) is arranged to receive a fixing screw (13).

11. The pallet clamping and positioning system according to claim 10, **characterized in that** an additional through threaded hole (9', 29') is arranged in the middle between two adjacent through threaded holes (9, 29) located at the centre of the intersection (11, 21) of the two perpendicularly extending grooves (8, 28).

12. The pallet clamping and positioning system according to claims 10 or 11, **characterized in that** the through threaded hole (9, 9'; 29, 29') is sealed by a plastic threaded plug (12).

## Patentansprüche

1. Klemm- und Positioniersystem für Paletten, umfassend eine Grundplatte und wenigstens eine Palette, auf der ein maschinell zu bearbeitendes Werkstück angeordnet ist und das schnelle und genaue Positionieren und Fixieren der Palette und somit des Werkstücks auf der Grundplatte sowohl in horizontaler als auch in vertikaler Richtung ermöglicht, wobei die Grundplatte (1) eine erste Gruppe (6) von parallelen Rillen (8) und eine zweite Gruppe (7) von parallelen Rillen (8), die sich rechtwinklig zu der ersten Gruppe (6) von Rillen (8) erstreckt, aufweist, die auf ihrer Oberseite (1.1) angeordnet sind, wobei ein Abstand (d) zwischen den Mittellinien der Rillen (8) gleich ist, **dadurch gekennzeichnet, dass** jede Rille (8) im Querschnitt die Form eines gleichseitigen Trapezes aufweist und **dass** die Palette (2) wenigstens eine kurze Positionierrille (17) und ein Zentrierelement (3) aufweist, die darin in ihrer Unterseite (2.2) angeordnet sind, wobei wenigstens ein Teil (19) des Zentrierelements (3) eine Querschnittsform eines gleichseitigen Trapezes aufweist, das, wenn die Palette (2) auf der Grundplatte (1) befestigt ist, mit einem Abschnitt der Rille (8) der Grundplatte (1) eingreift.

2. Klemm- und Positioniersystem für Paletten nach Anspruch 1, **dadurch gekennzeichnet, dass** die Palette (2) eine erste Gruppe (26) von parallelen Rillen (28) und eine zweite Gruppe (27) von parallelen Rillen (28), die sich rechtwinklig zu der ersten Gruppe (26) von Rillen (28) erstreckt, aufweist, die auf ihrer Oberseite (1.1) angeordnet sind, wobei ein Abstand (d) zwischen den Mittellinien der Rillen (28) gleich ist und jede Rille (28) im Querschnitt die Form eines gleichseitigen Trapezes aufweist.

3. Klemm- und Positioniersystem für Paletten nach einem der vorhergehenden Ansprüche, **dadurch gekennzeichnet, dass** jede kurze Positionierrille (17) in der Mitte jeder Seite der Palette (2) angeordnet ist, wobei die Palette (2) wenigstens eine kurze Positionierrille (17), vorzugsweise vier Rillen, umfasst.

4. Klemm- und Positioniersystem für Paletten nach einem der vorhergehenden Ansprüche, **dadurch gekennzeichnet, dass** die kurzen Positionierrillen (17) auf der Palette (2) so in einem 90°-Gitter angeordnet sind, dass sich jeweils zwei kurze Positionierrillen (17) einander gegenüber befinden.

5. Klemm- und Positioniersystem für Paletten nach einem der vorhergehenden Ansprüche, **dadurch gekennzeichnet, dass** der keilförmige Teil (19) des Zentrierelements (3) in der Form eines gleichseitigen Trapezes ausgelegt ist, dessen Seiten um einen Winkel (α) geneigt sind, der gleich oder größer 0° ist.

6. Klemm- und Positioniersystem für Paletten nach Anspruch 5, **dadurch gekennzeichnet, dass** der Winkel (α) zwischen 5° und 30°, vorzugsweise zwischen 8° und 12°, liegt.

7. Klemm- und Positioniersystem für Paletten nach einem der vorhergehenden Ansprüche, **dadurch gekennzeichnet, dass** der Abstand (d) zwischen den zwei in Längsrichtung verlaufenden Mittellinien von zwei benachbarten Rillen (8, 28) gleich einer ganzen Zahl ist, die durch 10 teilbar ist.

8. Klemm- und Positioniersystem für Paletten nach einem der vorhergehenden Ansprüche, **dadurch gekennzeichnet, dass** jede Rille (8, 28) die Querschnittsform eines gleichseitigen Trapezes aufweist, wobei der Grund der Rille (8, 28) die kürzere Grundseite des Trapezes ist.

9. Klemm- und Positioniersystem für Paletten nach einem der vorhergehenden Ansprüche, **dadurch gekennzeichnet, dass** jede einzelne Rille (8, 28) jeder Gruppe (6, 7; 26, 27) von Rillen in Bezug auf den Abstand von der Mittellinie (X, Y) der Grundplatte (1) und/oder der Mittellinie (U, V) der Palette (2) die Lage betreffend markiert ist, wobei der Rille (8, 28), die koaxial mit der Mittellinie (X, Y) der Grundplatte (1) und/oder der Mittellinie (U, V) der Palette (2) verläuft, der Wert "0" zugeordnet ist.

10. Klemm- und Positioniersystem für Paletten nach einem der vorhergehenden Ansprüche, **dadurch gekennzeichnet, dass** in der Mitte jedes Schnittpunkts (11, 21) der zwei sich rechtwinklig erstreckenden Rillen (8, 28) eine Durchgangsgewindebohrung (9, 29) so angeordnet ist, dass sie eine Befestigungsschraube (13) aufnimmt.

11. Klemm- und Positioniersystem für Paletten nach Anspruch 10, **dadurch gekennzeichnet, dass** eine zusätzliche Durchgangsgewindebohrung (9', 29') in der Mitte zwischen zwei benachbarten Durchgangsgewindebohrungen (9, 29) angeordnet ist, die sich in der Mitte des Schnittpunkts (11, 21) der zwei sich rechtwinklig erstreckenden Rillen (8, 28) befinden.

12. Klemm- und Positioniersystem für Paletten nach Anspruch 10 oder 11, **dadurch gekennzeichnet, dass** die Durchgangsgewindebohrung (9, 9'; 29, 29') durch einen Gewindestopfen (12) aus Kunststoff verschlossen ist.

## Revendications

1. Système de serrage et de positionnement de palette comprenant une plaque de base et au moins une palette sur laquelle est disposée une pièce à usiner et permettant un positionnement et une fixation rapides et précis de la palette et donc de la pièce à usiner sur la plaque de base dans les deux directions horizontale et verticale, dans lequel la plaque de base (1) comporte, dans sa face supérieure (1.1), un premier groupe (6) de rainures parallèles (8) et un second groupe (7) de rainures parallèles (8) s'étendant perpendiculairement au premier groupe (6) de rainures (8), une distance (d) entre les lignes médianes des rainures (8) étant égale, **caractérisé en ce que** chaque rainure (8) a la forme d'un trapèze équilatéral en section transversale, et **en ce que** la palette (2) présente au moins une rainure de positionnement courte (17) et un élément de centrage (3) disposé à l'intérieur de celle-ci dans sa face inférieure (2.2), au moins une partie (19) de l'élément de centrage (3) ayant une forme de section transversale d'un trapèze équilatéral qui, lorsque la palette (2) est montée sur la plaque de base (1), vient en prise avec une partie de la rainure (8) de la plaque de base (1).

2. Système de serrage et de positionnement de palette selon la revendication 1, **caractérisé en ce que** la palette (2) présente, sur sa face supérieure (1.1), un premier groupe (26) de rainures parallèles (28) et un second groupe (27) de rainures parallèles (28) s'étendant perpendiculairement au premier groupe (26) de rainures (28), une distance (d) entre les lignes médianes des rainures (28) étant égale, et chaque rainure (28) ayant la forme d'un trapèze équilatéral en section transversale.

3. Système de serrage et de positionnement de palette selon l'une quelconque des revendications précédentes, **caractérisé en ce que** chaque rainure de positionnement courte (17) est disposée au centre de chaque côté de la palette (2), la palette (2) comprenant au moins une rainure de positionnement courte (17), de préférence quatre rainures.

4. Système de serrage et de positionnement de palette selon l'une quelconque des revendications précédentes, **caractérisé en ce que** les rainures de positionnement courtes (17) sur la palette (2) sont disposées dans une grille de 90° de sorte que chaque deux rainures de positionnement courtes (17) sont opposées l'une à l'autre.

5. Système de serrage et de positionnement de palette selon l'une quelconque des revendications précédentes, **caractérisé en ce que** la partie cunéiforme (19) de l'élément de centrage (3) est configurée en forme de trapèze équilatéral dont les côtés sont inclinés d'un angle (α) égal ou supérieur à 0°.

6. Système de serrage et de positionnement de palette selon la revendication 5, **caractérisé en ce que** l'angle (α) est compris entre 5° et 30°, de préférence entre 8° et 12°.

7. Système de serrage et de positionnement de palette selon l'une quelconque des revendications précédentes, **caractérisé en ce que** la distance (d) entre les deux lignes médianes longitudinales de deux rainures adjacentes (8, 28) est égale à un nombre entier, divisible par 10.

8. Système de serrage et de positionnement de palette selon l'une quelconque des revendications précédentes, **caractérisé en ce que** chaque rainure (8, 28) a la forme de section transversale d'un trapèze équilatéral, la base de la rainure (8, 28) étant la base la plus courte du trapèze.

9. Système de serrage et de positionnement de palette selon l'une quelconque des revendications précédentes, **caractérisé en ce que** chaque rainure individuelle (8, 28) de chaque groupe (6, 7; 26, 27) de rainures est marquée en position par rapport à la distance de la ligne médiane (X, Y) de la plaque de base (1) et/ou de la ligne médiane (U, V) de la palette (2), la rainure (8, 28) qui est coaxiale avec la ligne médiane (X, Y) de la plaque de base (1) et/ou la ligne médiane (U, V) de la palette (2), se voyant attribuer la valeur "0".

10. Système de serrage et de positionnement de palette selon l'une quelconque des revendications précédentes, **caractérisé en ce qu'**au centre de chaque intersection (11, 21) des deux rainures s'étendant perpendiculairement (8, 28), un trou fileté traversant (9, 29) est prévu pour recevoir une vis de fixation (13) .

11. Système de serrage et de positionnement de palette selon la revendication 10, **caractérisé en ce qu'**un trou fileté traversant supplémentaire (9', 29') est disposé au milieu entre deux trous filetés traversants adjacents (9, 29) situés au centre de l'intersection (11, 21) des deux rainures s'étendant perpendiculairement (8, 28).

12. Système de serrage et de positionnement de palette selon les revendications 10 ou 11, **caractérisé en ce que** le trou fileté traversant (9, 9'; 29, 29') est obturé par un bouchon fileté en plastique (12).
